# EUROPÄISCHE PATENTSCHRIFT

(11) **EP 2 949 582 B1**
(45) Veröffentlichungstag und Bekanntmachung des Hinweises auf die Patenterteilung: **07.09.2016**
(21) Anmeldenummer: 14170569.9
(22) Anmeldetag: 30.05.2014
(51) Int. Cl.: B65B 35/58, B65B 69/00, B65G 47/248, B65G 47/252

(54) **Vorrichtung zum Entleeren und anschließenden Entsorgen von mit Broschüren befüllten Trays**
Device for emptying and subsequent disposal of trays filled with brochures
Dispositif de déchargement et d'élimination consécutive de plateaux remplis de brochures

(43) Veröffentlichungstag der Anmeldung: 02.12.2015
(73) Patentinhaber: UHLMANN PAC-SYSTEME GmbH & Co. KG, 88471 Laupheim (DE)
(72) Erfinder: Krüger, Andreas, 89155 Erbach (DE); Alger, Claus, 88400 Biberach (DE); Rafensteiner, Volker, 88471 Bihlafingen (DE); Russ, Andreas, 88477 Schönebürg (DE)
(74) Vertreter: Wächter, Jochen

(56) Entgegenhaltungen:
- EP-A1- 2 439 142
- EP-A2- 1 086 628
- DE-U1-202012 000 938

## Beschreibung

Die vorliegende Erfindung betrifft eine Vorrichtung zum Entleeren und anschließenden Entsorgen von mit Broschüren befüllten Trays.

Vorrichtungen und Verfahren zum Transportieren und Einschieben von Packgut sind allgemein z.B. aus EP 2 439 142 A1 bekannt. In der pharmazeutischen Industrie ist es üblich, dass größere Beipackzettel, auch Broschüren genannt, zusammen mit einem verpackten oder abgefüllten Wirkstoff in eine Faltschachtel oder in eine Dose verpackt werden.

Hierfür sind unterschiedliche Verfahren und Vorrichtungen bekannt. In einem ersten Verfahren werden die Broschüren von einer Faltvorrichtung gefaltet und dem Verpackungsprozess direkt zugeführt.

In einem zweiten Verfahren werden die Broschüren in sogenannten Trays vorverpackt angeliefert. Die Broschüren müssen, bevor sie dem Verpackungsprozess zugeführt werden können, aus den angelieferten Trays herausgeholt bzw. ausgepackt werden. Die entpackten Broschüren bzw. die aus dem Tray herausgeholten Broschüren werden in der Regel einem Speicherschacht oder Magazin zugeführt, in dem die Broschüren zunächst gespeichert werden, um von dort aus gezielt in den Verpackungsprozess der pharmazeutischen Artikel eingegliedert zu werden.

Das Entleeren der Trays kann auf unterschiedliche Art und Weise erfolgen. Eine erste Möglichkeit ist die manuelle Entleerung, die hinsichtlich des Durchsatzes zwangsläufig an Grenzen stößt.

Es sind auch halbautomatische Übergabevorrichtungen bekannt, bei denen die Trays manuell zugeführt werden und die Broschüren automatisch aus den Trays entnommen werden. Nachteilig an diesen Vorrichtungen sind der hohe Platzbedarf und der hohe Anteil manueller Tätigkeit.

Der vorliegenden Erfindung liegt die Aufgabe zugrunde, eine Vorrichtung zum Entleeren und anschließenden Entsorgen von mit Broschüren befüllten Trays zu schaffen, bei der sowohl das Entleeren der Trays als auch das Entsorgen der leeren Trays automatisch realisiert ist und die zudem eine platzsparende und kompakte Bauweise aufweist, sowie ein entsprechendes Verfahren zum Entleeren und anschließenden Entsorgen von mit Broschüren befüllten Trays anzugeben.

Diese Aufgabe wird durch die Merkmale des Anspruchs 1 bzw. des Anspruchs 12 gelöst.

Erfindungsgemäß weist die Vorrichtung zum Entleeren und anschließenden Entsorgen von mit Broschüren befüllten Trays eine Zuführvorrichtung zum Herantransportieren der befüllten Trays in einer Transportrichtung und eine Wendevorrichtung zum Drehen der Trays auf. Die Wendevorrichtung umfasst einen Schlitten, der zwischen einer Aufnahmestellung, einer Entleerstellung und einer Entsorgungsstellung hin- und herbewegbar und dabei drehbar ist. Der Schlitten weist wiederum ein erstes Führungselement und ein zweites Führungselement auf, die entlang einer im Wesentlichen U-förmigen Bahn, die einen ersten Schenkel und einen zweiten Schenkel aufweist, geführt sind. Das erste Führungselement ist in der Entleerstellung des Schlittens in einem Endbereich des ersten Schenkels positioniert und das zweite Führungselement ist in der Entsorgungsstellung des Schlittens in einem Endbereich des zweiten Schenkels positioniert. In der Aufnahmestellung des Schlittens sind das erste Führungselement und das zweite Führungselement zwischen den beiden Endbereichen positioniert. Die Vorrichtung weist weiterhin mindestens ein Schiebeelement zum Entleeren der Trays in der Entleerstellung des Schlittens und ein Fördermittel zum Weiterfördern der aus dem Tray geschobenen Broschüren auf.

Mit dieser Ausgestaltung wird eine Vorrichtung zum Entleeren und Entsorgen von Trays geschaffen, die eine platzsparende und kompakte Bauweise aufweist und zusätzlich das Entleeren und Entsorgen der Trays besonders schnell und sicher gestaltet.

Um eine stabile Führung der Führungselemente zu erzielen, ist die im Wesentlichen U-förmige Bahn vorzugsweise zumindest teilweise durch eine Führungskurve gebildet. Die Führungselemente können dabei als Rollen ausgebildet sein, die auf der Führungskurve abrollen.

Um den Drehvorgang möglichst einfach zu gestalten, weist die Wendevorrichtung zum Drehen des Schlittens vorzugsweise einen ersten Antrieb und einen zweiten Antrieb auf, die unabhängig voneinander ansteuerbar sind.

Vorteilhafterweise wird das Drehen des Schlittens durch zwei Pneumatikzylinder bewirkt, wobei der erste Antrieb den ersten Pneumatikzylinder und der zweite Antrieb den zweiten Pneumatikzylinder umfasst, die jeweils im Wesentlichen vertikal hin- und herbewegbar sind.

Besonders vorteilhaft ist es, den ersten Pneumatikzylinder in einem Bereich nahe der Zuführvorrichtung und den zweiten Pneumatikzylinder in einem Bereich der Wendevorrichtung, der der Zuführvorrichtung abgewandt ist, anzuordnen. Durch diese Anordnung der Pneumatikzylinder kann der Schlitten auf einfache Weise in die gewünschte Stellung gedreht werden.

Vorzugsweise weist der Schlitten eine Auflagefläche und eine davon winklig abragende Seitenwand auf, wobei im Bereich der Seitenwand eine Aufnahmetasche ausgebildet ist, in der der Tray während des Drehens aufgenommen ist. Die Aufnahmetasche verhindert ein Umkippen bzw. ein Herunterfallen des Trays von der Auflagefläche des Schlittens während der Drehbewegung.

Vorzugsweise weisen der erste und der zweite Pneumatikzylinder Auflageelemente auf, wobei das Auflageelement des ersten Pneumatikzylinders einen Stift aufnimmt, der mit dem ersten Führungselement verbunden ist, und wobei das Auflageelement des zweiten Pneumatikzylinders eine Stange, die in einem Übergangsbereich zwischen der Auflagefläche und der Seitenwand des Schlittens angeordnet ist, aufnimmt. Auf diese Weise ist sichergestellt, dass die Verbindung zwischen Antrieb und Schlitten auf einfache Weise hergestellt und gelöst wird.

Um ein Herausschieben der Broschüren aus den Trays auf einfache Weise zu gewährleisten, ist das mindestens eine Schiebeelement entlang einer Führungsschiene hin- und herbewegbar.

Besonders bevorzugt sind zwei Schiebeelemente zum Entleeren des Trays vorgesehen, wobei das erste Schiebeelement an einer ersten Führungsschiene hin- und herbewegbar ist und das zweite Schiebeelement an einer zweiten Führungsschiene hin- und herbewegbar sein kann.

In diesem Fall ist das erste Schiebeelement vorzugsweise außerdem um eine erste Drehachse drehbar, die im Wesentlichen senkrecht zur Transportrichtung verläuft, und das zweite Schiebeelement ist vorzugsweise um eine zweite Drehachse drehbar, die im Wesentlichen parallel zur Transportrichtung verläuft. Die Schiebeelemente können somit hochgeklappt werden. Dies bewirkt im Falle des ersten Schiebeelements, dass der Drehvorgang der Wendevorrichtung nicht behindert wird. Das seitliche Hochklappen des zweiten Schiebeelements lässt hingegen das gewünschte Umfallen der ausgeschobenen Broschüren zu.

Besonders vorteilhaft ist es, wenn die U-förmige Bahn einen geradlinigen Basisabschnitt aufweist, dessen Länge im Wesentlichen der Länge des ersten Schenkels entspricht, sodass die beiden Führungselemente in der Aufnahmestellung jeweils in einem Übergangsbereich zwischen dem jeweiligen Schenkel und dem Basisabschnitt positioniert sind. Die Auflagefläche kann somit in der Horizontalen angeordnet werden und die herantransportierten Trays aufnehmen, und anschließend kann der Schlitten der Wendevorrichtung durch Anheben des ersten Führungselements auf einfache Weise von der Aufnahmestellung in die Entleerstellung gedreht werden.

Besonders vorteilhaft ist es, einen Behälter zum Aufnehmen der leeren, zu entsorgenden Trays unterhalb der Wendevorrichtung anzuordnen. Die Aufnahmefläche des Schlittens wird in der Entsorgungsstellung somit vollautomatisch entleert und ist bereit für die Aufnahme des nächsten Trays.

Erfindungsgemäß umfasst das Verfahren zum Aufnehmen, Entleeren und anschließenden Entsorgen von mit Broschüren befüllten Trays folgende Schritte:
- Zuführen eines befüllten Trays in einer Transportrichtung in einen Schlitten einer Wendevorrichtung, der sich in einer Aufnahmestellung befindet,
- anschließendes Drehen des Schlittens in einer ersten Drehrichtung um 60° bis 120° in eine Entleerstellung und Entleeren des mit Broschüren gefüllten Trays durch Herausschieben der Broschüren aus dem Tray im Wesentlichen senkrecht zur Transportrichtung,
- anschließendes Zurückdrehen des Schlittens an der Aufnahmestellung vorbei in einer der ersten Drehrichtung entgegengesetzten zweiten Drehrichtung in eine Entsorgungsstellung, in der der Schlitten bezüglich der Aufnahmestellung um 45° bis 110° in die zweite Drehrichtung gedreht ist, sodass das entleerte Tray von dem Schlitten fällt, und
- anschließendes Zurückdrehen des Schlittens in die Aufnahmestellung.

Bei diesem Verfahren geschieht lediglich das Einlegen der Trays in die Zuführvorrichtung manuell, wodurch eine höhere Produktivität erreicht wird. Außerdem wird durch das Hin- und Zurückdrehen des Schlittens zwischen den verschiedenen Stellungen der Platzbedarf minimiert.

Damit das Aufnehmen der herantransportierten Trays von der Zuführvorrichtung auf eine Auflagefläche des Schlittens gewährleistet wird, ist die Auflagefläche des Schlittens in einem Winkel von zwischen -20° und +20°, vorzugsweise 0°, zur Horizontalen angeordnet.

Vorzugsweise ist der Schlitten in der Entleerstellung bezüglich der Aufnahmestellung um zwischen 70° und 110° in die erste Drehrichtung gedreht, mehr bevorzugt um zwischen 80° und 100°, mehr bevorzugt um zwischen 85° und 95°, besonders bevorzugt um 90°.

Vorzugsweise ist der Schlitten in der Entsorgungsstellung bezüglich der Aufnahmestellung um zwischen 45° und 105° in die zweite Drehrichtung gedreht, mehr bevorzugt um zwischen 45° und 90°, mehr bevorzugt um zwischen 60° und 90°, besonders bevorzugt um zwischen 65° und 80°. Mit einer solchen Stellung des Schlittens in der Entsorgungsstellung wird sichergestellt, dass das zu entsorgende Tray von der Auflagefläche des Schlittens herabgleitet.

Weitere Merkmale und Vorteile der vorliegenden Erfindung ergeben sich aus der nachfolgenden Beschreibung unter Bezugnahme auf die Zeichnungen.
- Fig. 1: ist eine Perspektivansicht einer Ausführungsform der erfindungsgemäßen Vorrichtung, bei der zur besseren Darstellung einige Gehäuseteile weggelassen sind;
- Fig. 2: ist eine Ansicht wie in Fig. 1, bei der zur besseren Darstellung andere Gehäuseteile weggelassen sind;
- Fig. 3: ist eine Perspektivansicht der Wendevorrichtung gemäß Fig. 1, wobei sich der Schlitten in einer Aufnahmestellung befindet;
- Fig. 4: ist eine Ansicht wie in Fig. 3 mit zusätzlichen Komponenten der Vorrichtung;
- Fig. 5: ist eine Perspektivansicht der Wendevorrichtung wie in Fig. 3, wobei der Schlitten in einer ersten Drehrichtung gedreht wird;
- Fig. 6: ist eine Ansicht wie in Fig. 5 mit zusätzlichen Komponenten der Vorrichtung;
- Fig. 7: ist eine Perspektivansicht der Vorrichtung aus Fig. 2, wobei sich der Schlitten in der Entleerstellung befindet und zwei Schiebeelemente zum Ausschieben der Broschüren sichtbar sind;
- Fig. 8: ist eine Perspektivansicht der Vorrichtung ähnlich wie in Fig. 7, wobei das erste Schiebeelement nun in den Tray eingeschwenkt ist;
- Fig. 9: ist eine Ansicht ähnlich zu Fig. 8, wobei die Schiebeelemente die Broschüren aus dem Tray geschoben haben;
- Fig. 10: ist eine Perspektivansicht der Wendevorrichtung ähnlich zu Fig. 3, mit dem Schlitten in einer Entsorgungsstellung; und
- Fig. 11: ist eine Ansicht wie in Fig. 10 mit zusätzlichen Komponenten der Vorrichtung.

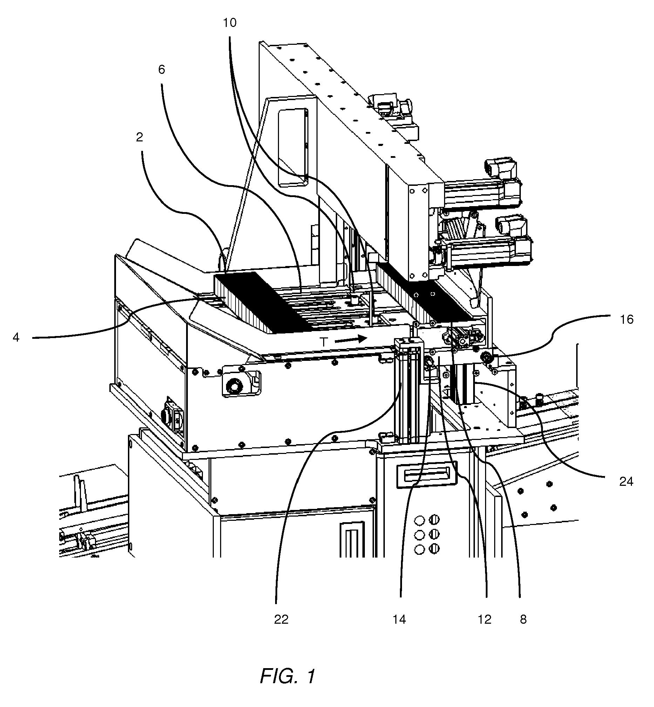

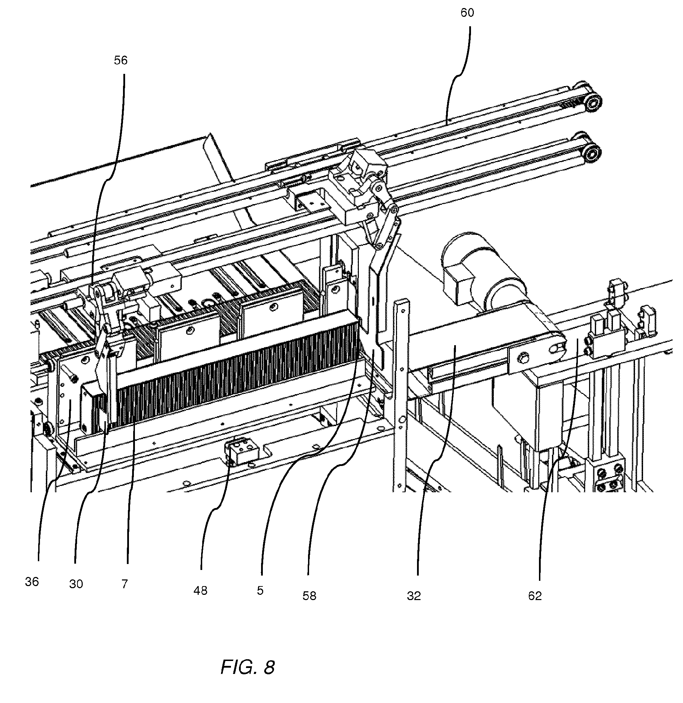

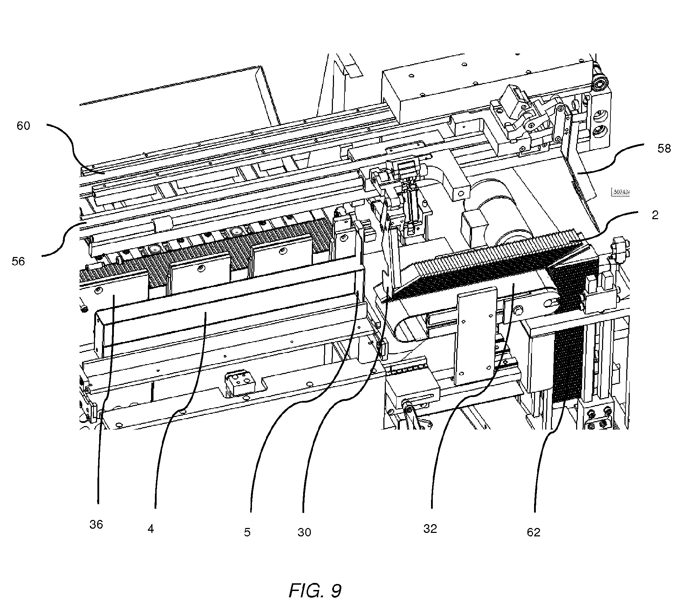

Fig. 1 bis 11 zeigen Aufbau und Funktionsweise einer Ausführungsform der erfindungsgemäßen Vorrichtung. Die mit Broschüren 2 oder Beipackzetteln befüllten Trays 4 werden in der Regel manuell in eine Zuführvorrichtung 6 eingelegt und von der Zuführvorrichtung 6 in einer Transportrichtung T an eine Wendevorrichtung 8 herantransportiert. Die Trays 4 müssen vor dem Einlegen in die Zuführvorrichtung 6 von einem Bediener geöffnet werden. Von dem Tray 4 wird im beschriebenen Anwendungsfall eine Schmalseite 5 (dargestellt in Fig. 8 und 9) geöffnet und eine Abdeckung auf der Oberseite 7 des Trays 4 wird entfernt. An der offenen Schmalseite 5 werden die Broschüren 2 später ausgeschoben und die offene Oberseite 7 des Trays 4 dient zum Einführen eines Schiebeelements 30 zum Ausschieben der Broschüren 2.

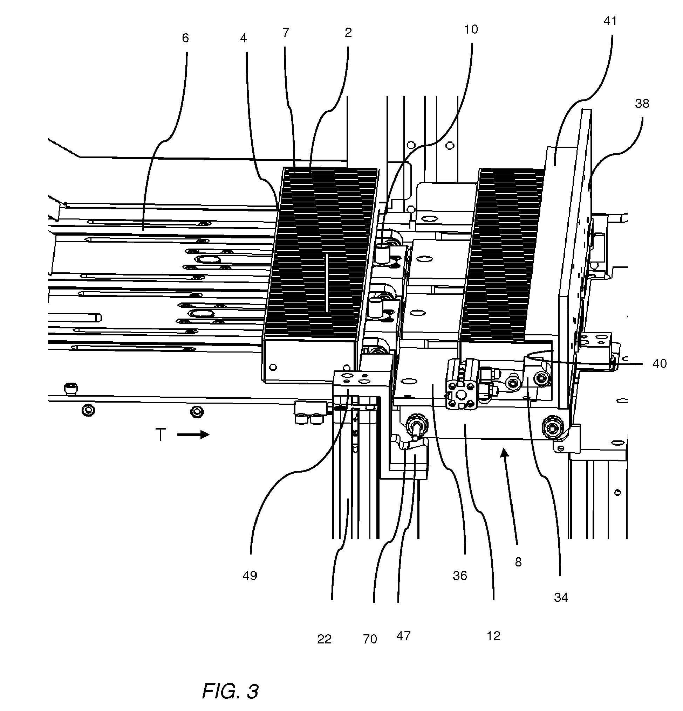

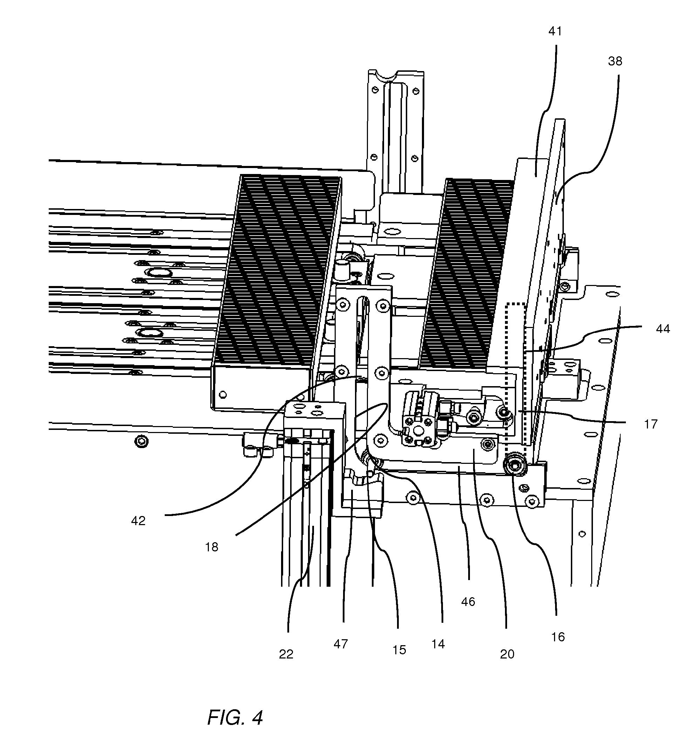

Die Zuführvorrichtung 6 kann unter anderem als Förderband, insbesondere als Speicherband oder als Rutsche ausgebildet sein. Die Zuführvorrichtung 6 weist in einem Übergangsbereich zur Wendevorrichtung 8 Stopper 10 auf, mit denen die Trays 4 zurückgehalten werden, wenn sich die Wendevorrichtung 8 in Betrieb befindet oder bereits mit einem Tray 4 besetzt ist, wie in Fig. 3 und Fig. 4 dargestellt ist. Durch die Zuführvorrichtung 6 ist ein kontinuierlicher Nachschub an Trays 4 geregelt, sodass die Wendevorrichtung 8 sofort wieder befüllt werden kann, sobald ein bereits entleertes Tray 4 von der Wendevorrichtung 8 entsorgt wurde und die Wendevorrichtung 8 zur Aufnahme eines weiteren Trays 4 bereit ist.

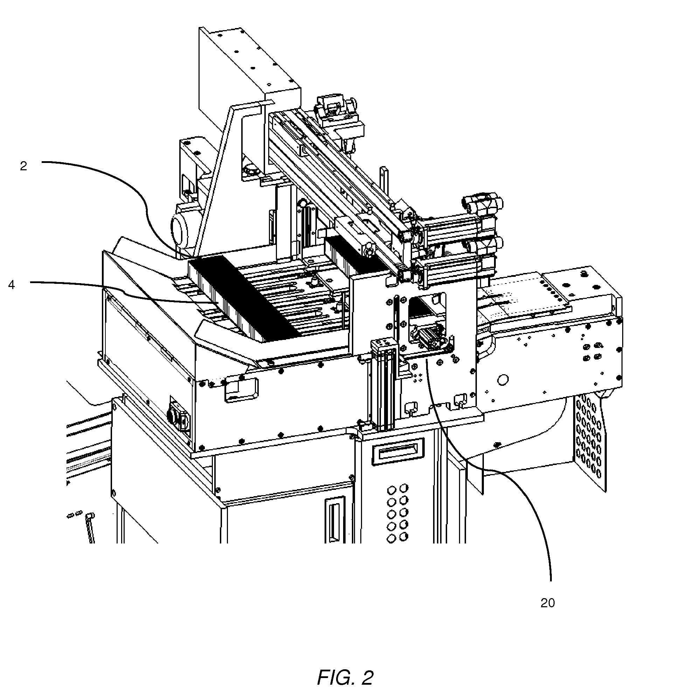

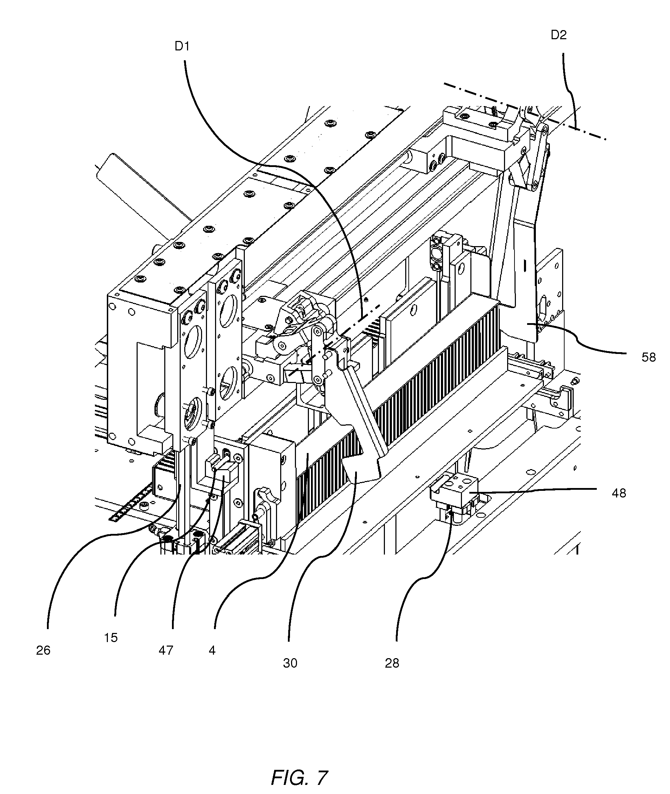

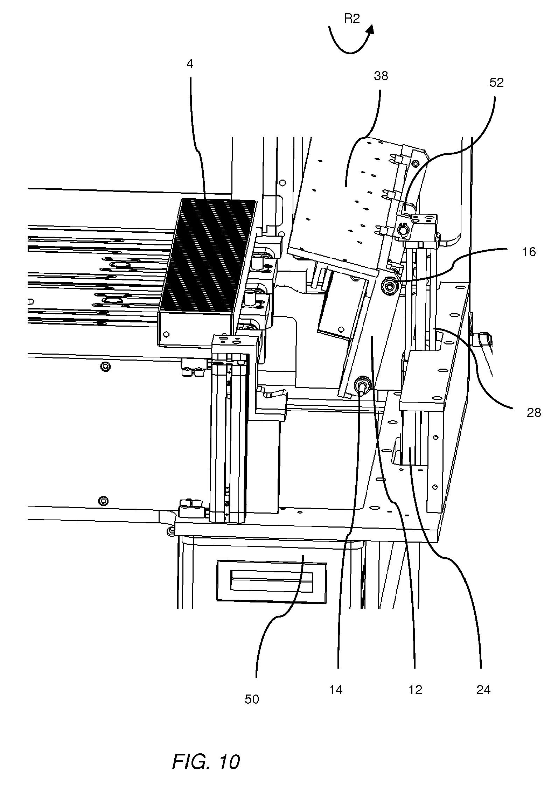

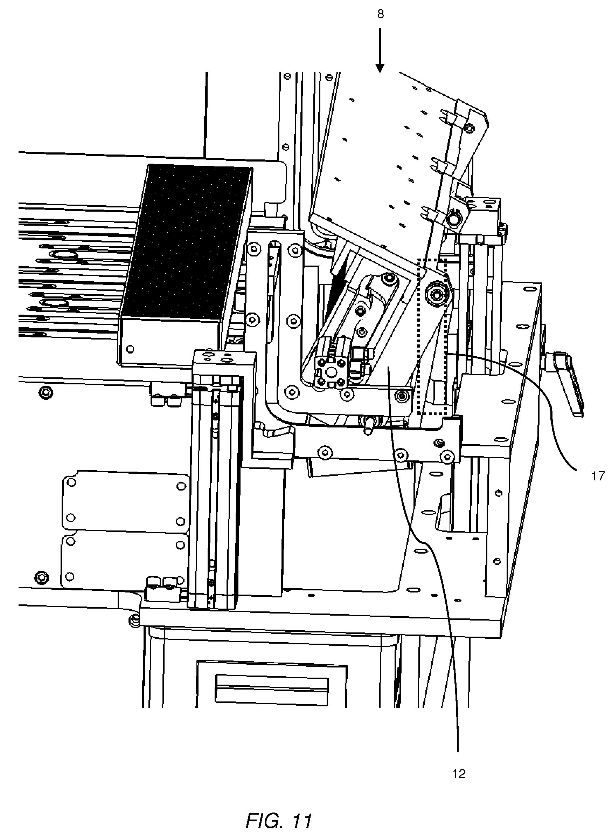

Die Wendevorrichtung 8 weist zum Drehen der Trays 4 einen Schlitten 12 auf, der zwischen einer Aufnahmestellung (Fig. 1 bis 4), einer Entleerstellung (Fig. 7 und 8) und einer Entsorgungsstellung (Fig. 10 und 11) hin- und herbewegbar ist. Bei dieser Bewegung wird der Schlitten 12 auch jeweils gedreht bzw. gekippt. Der Schlitten 12 weist ein erstes Führungselement 14 und ein zweites Führungselement 16 auf, die vorzugsweise als Rollen ausgebildet sind und anhand derer der Schlitten 12 in die einzelnen Stellungen geführt wird. Die Führungselemente 14, 16 sind entlang einer im Wesentlichen U-förmigen Bahn 17 geführt. Diese Bahn 17 ist im dargestellten Beispielsfall teilweise durch eine Führungskurve 18 gebildet, die als Vorsprung an der Innenseite einer seitlichen Platte 20 des Gehäuses der Vorrichtung (aus Gründen der Übersichtlichkeit nur in Fig. 2, 4, 6 und 11 dargestellt) ausgebildet ist. Ebenso kommen alle möglichen anderen Formen von Führungselementen 14, 16 und Führungskurven 18 in Frage.

Bei der Bahn 17, die in Fig. 4 und Fig. 11 gestrichelt vervollständigt wurde, kann es sich in Teilen auch um eine rein geometrische Bahnkurve handeln, entlang der sich die Führungselemente 14, 16 bewegen, ohne dass eine entsprechende Führungskurve oder ein entsprechend geformtes Teil der Vorrichtung vorliegt, Ebenso kann die Bahn 17 identisch mit der Führungskurve 18 verlaufen, oder zumindest in Teilen mit ihr übereinstimmen, wie im vorliegenden Beispielsfall.

Das Drehen des Schlittens 12 erfolgt durch einen ersten Antrieb 22 und einen zweiten Antrieb 24. Der erste Antrieb 22 umfasst einen ersten Pneumatikzylinder 26 und der zweite Antrieb 24 umfasst einen zweiten Pneumatikzylinder 28. Der erste Pneumatikzylinder 26 ist in einem Bereich der Wendevorrichtung 8, der nahe der Zuführvorrichtung 6 liegt, angeordnet, und der zweite Pneumatikzylinder 28 ist in einem Bereich der Wendevorrichtung 8, der der Zuführvorrichtung 6 abgewandt ist, angeordnet. Auf die genaue Anordnung der beiden Pneumatikzylinder 26, 28 und deren Einwirkung auf den Schlitten 12 wird weiter unten noch näher eingegangen.

Die Drehbewegung des Schlittens 12 erfolgt durch ein im Wesentlichen wechselseitiges vertikales Hin- und Herbewegen des ersten Pneumatikzylinders 26 und des zweiten Pneumatikzylinders 28. Damit die einzelnen Stellungen des Schlittens 12 angefahren werden können, sind die beiden Antriebe 22, 24 und somit die beiden Pneumatikzylinder 26, 28 unabhängig voneinander ansteuerbar. Neben dem Einsatz von Pneumatikzylindern 26, 28 ist es auch vorstellbar, dass andere Linearantriebe zum Einsatz kommen, oder dass der Schlitten 12 über einen vollständig anderen Antriebsmechanismus zwischen seinen Endstellungen bewegt wird.

Zum Entleeren der Trays 4 in der Entleerstellung des Schlittens 12 (Fig. 7 bis 9) ist mindestens ein Schiebeelement 30 vorgesehen. In einer bevorzugten Ausführungsform sind zwei Schiebeelemente 30, 58 zum Entleeren der Trays 4 vorgesehen. Auf die Funktionsweise der Schiebeelemente 30, 58 wird weiter unten unter Bezugnahme auf Fig. 7 bis 9 noch näher eingegangen.

In Fig. 3 und 4 ist die Aufnahmestellung des Schlittens 12 dargestellt, wobei der Schlitten 12 bereits mit einem mit Broschüren 2 gefüllten Tray 4 belegt ist. In der Aufnahmestellung befinden sich der erste Pneumatikzylinder 26 und der zweite Pneumatikzylinder 28 in einer eingefahrenen Position bzw. in einer inaktiven Stellung. Der Schlitten 12 weist ein seitliches Begrenzungselement 34 auf und kann schnell und einfach an unterschiedliche Traygrößen angepasst werden.

Der Schlitten 12 weist eine Auflagefläche 36 auf, auf der das Tray 4 angeordnet wird. Von der Auflagefläche 36 ragt eine Seitenwand 38 winklig ab. Im Bereich der Seitenwand 38 ist eine Aufnahmetasche 40 ausgebildet, in der das geöffnete Tray 4 aufgenommen wird. Die Aufnahmetasche 40 ist vorzugsweise U-förmig. Ein Schenkel der U-förmigen Aufnahmetasche 40 ist durch eine Wand 41 gebildet, die parallel zur Auflagefläche 36 des Schlittens 12 angeordnet ist und die Oberseite 7 des Trays 4 zumindest teilweise bedeckt. Der andere Schenkel der U-förmigen Aufnahmetasche 40 wird durch die Auflagefläche 36 des Schlittens 12 gebildet. Der Basisabschnitt der Aufnahmetasche 40 kann durch die Seitenwand 38 selbst gebildet sein. Es kann auch eine Formatkassette in den Schlitten eingesetzt 12 sein, die zumindest bestimmte Teile der Aufnahmetasche 40 bildet.

Die Auflagefläche 36 des Schlittens 12 ist in der Aufnahmestellung (Fig. 1 bis 4) in einem Winkel von zwischen -20° und +20°, vorzugsweise zwischen -5° und +5°, zur Horizontalen angeordnet. In der Regel wird der Winkel 0° betragen.

In Fig. 4 sind das erste Führungselement 14 und das zweite Führungselement 16 auf ihrer im Wesentlichen U-förmigen Bahn 17 in der Aufnahmestellung des Schlittens 12 gezeigt. Die U-förmige Bahn 17 weist einen ersten Schenkel 42 und einen zweiten Schenkel 44 sowie einen geradlinigen Basisabschnitt 46 auf. Vorzugsweise ragt ein Stift 15, der mit dem ersten Führungselement 14 verbunden ist, durch eine Ausnehmung der Platte 20 hindurch.

Vorzugsweise weist der Basisabschnitt 46 eine Länge auf, die im Wesentlichen einer Länge des ersten Schenkels 42 entspricht. Die Länge des zweiten Schenkels 44 kann ebenso groß sein wie die anderen Längen, wie in Fig. 4 dargestellt, aber auch etwas kürzer, wenn die Entsorgungsstellung des Schlittens 12 eine Kippung des Schlittens 12 um weniger als 90° zur Horizontalen erfordert. Vorzugsweise sind die jeweiligen Übergangsbereiche von den beiden Schenkeln 42, 44 in den Basisabschnitt 46 bogenförmig ausgebildet, sodass der Übergang des ersten Führungselements 14 oder des zweiten Führungselements 16 von einem der Schenkel 42, 44 in den Basisabschnitt 46 und umgekehrt harmonisch und fließend erfolgt.

Im dargestellten Beispielsfall ist die Führungskurve 18 L-förmig gestaltet und definiert den ersten Schenkel 42 und den Basisabschnitt 46 der U-förmigen Bahn 17. Der zweite Schenkel 44 der U-förmigen Bahn 18 verläuft hingegen außerhalb der Führungskurve 18.

In der Aufnahmestellung des Schlittens 12 sind die beiden Führungselemente 14, 16 jeweils in dem Übergangsbereich zwischen dem jeweiligen Schenkel 42, 44 und dem Basisabschnitt 46 positioniert.

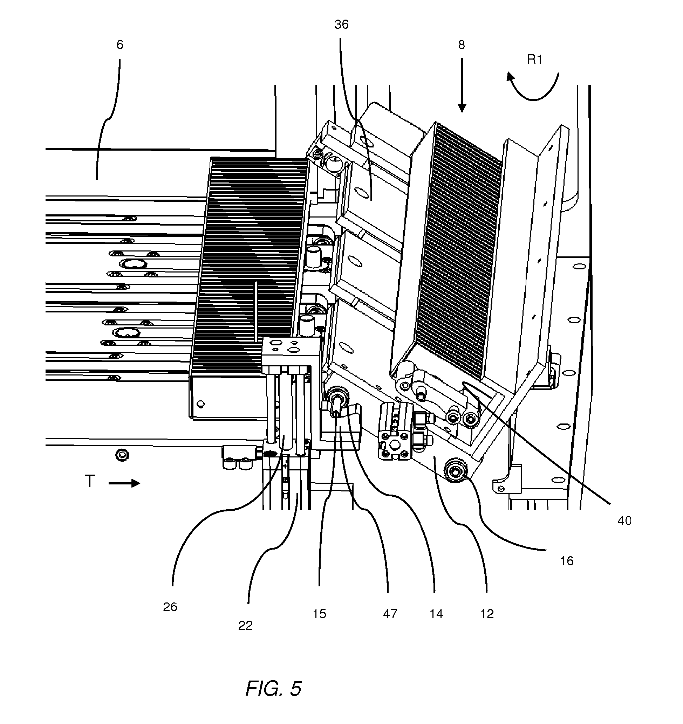

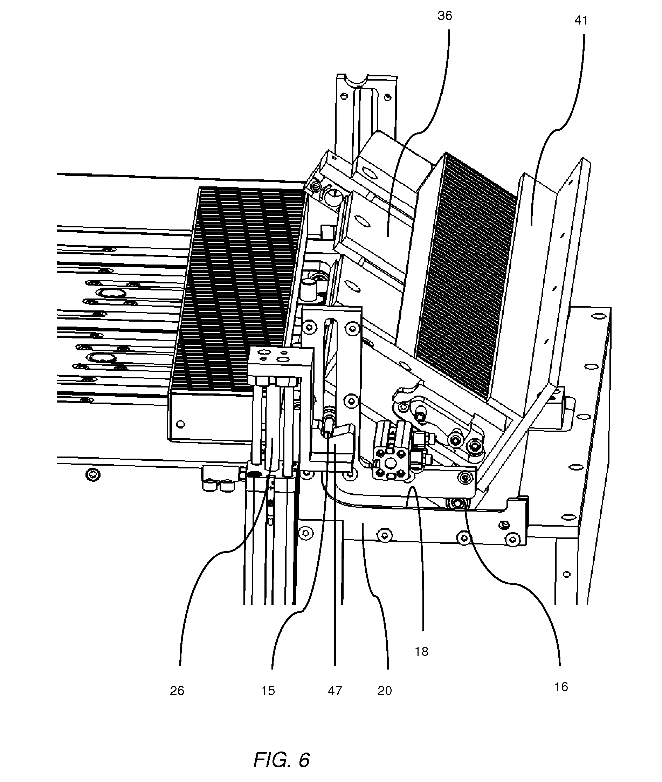

In Fig. 5 und 6 wird der Schlitten 12 mit dem Tray 4 von der Aufnahmestellung in einer ersten Drehrichtung R1 gedreht. Das Tray 4 ist dabei in der Aufnahmetasche 40 aufgenommen. Die Drehung des Schlittens 12 in die Entleerstellung wird durch die senkrechte Bewegung des ersten Pneumatikzylinders 26 bewirkt. Der erste Pneumatikzylinder 26 bewegt sich demnach vorzugsweise senkrecht zur Transportrichtung T.

Der Stift 15 des ersten Führungselements 14 des Schlittens 12 liegt auf einem Auflageelement 47 auf, das mittels eines Z-förmigen Elements 49 an dem ersten Pneumatikzylinder 26 befestigt ist. Somit nimmt das Auflageelement 47 bei der vertikalen Bewegung des Pneumatikzylinders 26 den Stift 15 und somit das erste Führungselement 14 in einer vertikalen Richtung mit.

Das Auflageelement 47 des ersten Pneumatikzylinders 26 ist vorzugweise an der Seite der Platte 20 angeordnet, die der Wendevorrichtung 8 abgewandt ist. Es ist aber auch vorstellbar, dass das Auflageelement 47 des ersten Pneumatikzylinders 26 zwischen der Platte 20 und der Wendevorrichtung 8 angeordnet ist. Das Auflageelement 47 weist eine geschwungene Oberfläche auf, die eine Mulde 70 (dargestellt in Fig. 3) aufweist, in der der Stift 15 des ersten Führungselements 14 drehbar aufgenommen ist, wenn der Schlitten 12 in der ersten Drehrichtung R1 aus der Aufnahmestellung in die Entleerstellung gedreht wird. Der zweite Antrieb 24 ist während des Drehvorgangs in der ersten Drehrichtung R1 in einer eingefahrenen Position bzw. in einem inaktiven Modus. Wird der erste Pneumatikzylinder 26 wieder komplett eingefahren und der Schlitten 12 bewegt sich wieder in die Aufnahmestellung, gleitet der Stift 15 des ersten Führungselements 14 einfach aus der Mulde 70 heraus.

Bei der vertikalen Aufwärtsbewegung des ersten Pneumatikzylinders 26 wird das erste Führungselement 14 in einen Endbereich des ersten Schenkels 42 der Bahn 17 geführt. In der Entleerstellung des Schlittens 12 (Fig. 7 und 8) befindet sich das erste Führungselement 14 dann in diesem Endbereich des ersten Schenkels 42. Das zweite Führungselement 16 wird durch das Anheben des ersten Führungselements 14 entlang des Basisabschnitts 46 der Bahn 17 von dem Übergangsbereich zwischen zweitem Schenkel 44 und Basisabschnitt 46 in den Übergangsbereich zwischen erstem Schenkel 42 und Basisabschnitt 46 geführt.

Der Schlitten 12 ist in der Entleerstellung (Fig. 7 und 8) bezüglich der Aufnahmestellung vorzugsweise um 90° gedreht. Die Auflagefläche 36 des Schlittens 12 ist in der Entleerstellung somit im Wesentlichen senkrecht zur Transportrichtung T.

Bezug nehmend auf Fig. 7 bis 9 weist die Vorrichtung zwei Schiebeelemente 30, 58 auf, wobei das erste Schiebeelement 30 an einer ersten Führungsschiene 56 geführt ist und das zweite Schiebeelement 58 an einer zweiten Führungsschiene 60 geführt ist. Die beiden Schiebeelemente 30, 58 sind entlang den beiden Führungsschienen 56, 60 quer zur Transportrichtung T hin- und herbewegbar. Das erste Schiebeelement 30 ist um eine erste Drehachse D1 drehbar, die im Wesentlichen senkrecht zur Transportrichtung T der Zuführvorrichtung 6 verläuft. Das zweite Schiebeelement 58 ist um eine zweite Drehachse D2 drehbar, die im Wesentlichen parallel zur Transportrichtung T der Zuführvorrichtung 6 verläuft.

Bevor der Schlitten 12 die Entleerstellung erreicht, befindet sich das erste Schiebeelement 30 in einer hochgeklappten Stellung (Fig. 7). Das bedeutet, dass das Schiebeelement 30 außerhalb des Bewegungsbereichs des Trays 4 ist. Das zweite Schiebeelement 58 nimmt während der Drehung des Schlittens 12 von der Aufnahmestellung zur Entleerstellung eine heruntergeklappte Stellung ein und übernimmt an der offenen Schmalseite 5 des Trays 4 die Stützfunktion für die Broschüren 2, damit keine Broschüren 2 während des Drehvorgangs aus dem Tray 4 fallen können. Sobald der Schlitten 12 mit dem zu entleerenden Tray 4 in die Entleerstellung gedreht ist, klappt das erste Schiebeelement 30 in eine zweite Position herunter und taucht in die offene Oberseite 7 des Trays 4 neben die äußerste Broschüre 2 ein (dargestellt in Fig. 8). Das zweite Schiebeelement 58 bleibt nach wie vor in seiner heruntergeklappten Stellung und verhindert das Herausfallen der Broschüren 2 an der offenen Schmalseite 5.

Durch eine Schiebebewegung des ersten Schiebeelements 30 und des zweiten Schiebeelements 58 entlang den Führungsschienen 58, 60 erfolgt das Entleeren des mit Broschüren 2 gefüllten Trays 4. In Fig. 9 ist der Schiebevorgang durch die Schiebeelemente 30, 58 bereits abgeschlossen.

Die Broschüren 2 werden aus dem Tray 4 in Richtung eines Fördermittels 32 aus dem Tray herausgeschoben. Vorzugsweise ist das Fördermittel 32 ein Band, das die Broschüren 2 in einer Richtung quer zur Transportrichtung T bewegt. Durch das Hochklappen des zweiten Schiebeelements 58 und der Vorwärtsbewegung des Fördermittels 32 fallen die senkrecht zum Fördermittel 32 angeordneten Broschüren 2 geschuppt auf das Fördermittel 32 und können dann z.B. liegend in einen Schacht 62 bewegt werden (Fig. 9).

Nach der Entleerung wird der Schlitten 12 von der Entleerstellung in die Entsorgungsstellung gebracht, wobei er die Aufnahmestellung passiert. Fig. 10 und 11 zeigen den Schlitten 12 in der Entsorgungsposition, in der der Schlitten 12 um vorzugsweise 60° bis 90° in einer zweiten Drehrichtung R2 bezüglich der Aufnahmestellung gedreht ist. Der Schlitten 12 ist in der Entsorgungsstellung so weit gedreht, dass der leere Tray 4 aus der Aufnahmetasche 40 des Schlittens 12 in einen Behälter 50 fällt bzw. gleitet. Der Behälter 50 ist unterhalb der Wendevorrichtung 8 angeordnet.

Wie bereits oben erwähnt, befindet sich der erste Pneumatikzylinder 26 in der Entleerstellung in einer ausgefahrenen Stellung und der zweite Pneumatikzylinder 28 in einer eingefahrenen Stellung. Um in die Entsorgungsstellung zu gelangen, muss der Schlitten 12 zunächst zurück in die Aufnahmestellung gedreht werden. Dies erfolgt durch Absenken bzw. Einfahren des ersten Pneumatikzylinders 26, sodass das zweite Führungselement 16 zurück in den Übergangsbereich zwischen zweitem Schenkel 44 und Basisabschnitt 46 der Bahn 17 geführt wird. Das erste Führungselement 14 wird gleichzeitig von dem Endbereich des ersten Schenkels 42 in den Übergangsbereich zwischen erstem Schenkel 42 und Basisabschnitt 46 der Bahn 17 zurückgeführt. Sobald der erste Pneumatikzylinder 26 vollständig eingezogen ist, startet der zweite Pneumatikzylinder 28 seine vertikale Aufwärtsbewegung. Das zweite Führungselement 16 wird hierbei entlang dem zweiten Schenkel 44 der U-förmigen Bahn 17 geführt und ist in der Entsorgungsstellung in einem Endbereich des zweiten Schenkels 44 positioniert. Das erste Führungselement 14 wird entlang dem Basisabschnitt 46 der U-förmigen Bahn 17 in den Übergangsbereich zwischen zweitem Schenkel 44 und Basisabschnitt 46 oder zumindest in dessen Nähe geführt.

Der zweite Pneumatikzylinder 28 ist mit einem Aufnahmeelement 48 verbunden, das eine Stange 52 aufnimmt, die am Schlitten 12 in dem Übergangsbereich zwischen Auflagefläche 36 und Seitenwand 38 des Schlittens 12 angeordnet ist.

Beim Bewegen des zweiten Pneumatikzylinders 28 nach oben nimmt das Auflageelement 48 des zweiten Pneumatikzylinders 28 die drehbar gelagerte Stange 52 auf. Anhand der vertikalen Bewegung des zweiten Pneumatikzylinders 28 wird der Schlitten 12 in der zweiten Drehrichtung R2 gedreht, bis die Entsorgungsstellung erreicht wird. Der erste Pneumatikzylinder 26 bleibt hierbei passiv.

Nach Entsorgen des Trays 4 in den Behälter 50 wird der Schlitten 12 zurück in die Aufnahmestellung geführt (Drehung in Drehrichtung R1). Dies erfolgt durch Absenken des zweiten Pneumatikzylinders 28. In der Aufnahmestellung hat sich die Stange 52 auch wieder von dem Auflageelement 48 gelöst. Der Schlitten ist nunmehr bereit, einen weiteren Tray 4 von der Zuführvorrichtung 6 aufzunehmen.

Es können auch mehrere Auflageelemente 47 beidseitig des Schlittens 12 angebracht sein, um eine symmetrische Anhebung des Schlittens 12 zu ermöglichen. Ebenso können mehrere Auflageelemente 48 vorgesehen sein, die vorzugsweise symmetrisch zur Mittelachse des Schlittens 12 angeordnet sind. Neben Auflageelementen 47, 48 und Stiften 15 bzw. Stangen 52 existiert eine ganze Reihe von anderen lösbaren Kopplungsmechanismen zwischen Antrieben 22, 24 und Schlitten 12, die sich für den Fachmann erschließen.

## Patentansprüche

1. Vorrichtung zum Entleeren und anschließenden Entsorgen von mit Broschüren (2) befüllten Trays (4), mit
einer Zuführvorrichtung (6) zum Herantransportieren der befüllten Trays (4) in einer Transportrichtung (T),
einer Wendevorrichtung (8) zum Drehen der Trays (4) mit einem Schlitten (12), der zwischen einer Aufnahmestellung, einer Entleerstellung und einer Entsorgungsstellung hin- und herbewegbar und dabei drehbar ist, wobei der Schlitten (12) ein erstes Führungselement (14) und ein zweites Führungselement (16) aufweist, die entlang einer im Wesentlichen U-förmigen Bahn (17), die einen ersten Schenkel (42) und einen zweiten Schenkel (44) aufweist, geführt sind, wobei das erste Führungselement (14) in der Entleerstellung des Schlittens (12) in einem Endbereich des ersten Schenkels (42) der U-förmigen Bahn (17) positioniert ist, wobei das zweite Führungselement (16) in der Entsorgungsstellung des Schlittens (12) in einem Endbereich des zweiten Schenkels (44) der U-förmigen Bahn (17) positioniert ist, und wobei das erste Führungselement (14) und das zweite Führungselement (16) in der Aufnahmestellung des Schlittens (12) zwischen den beiden Endbereichen positioniert sind,
mindestens einem Schiebeelement (30, 58) zum Entleeren der Trays (4) in der Entleerstellung des Schlittens (12), und
einem Fördermittel (32) zum Weiterfördern der aus dem Tray (4) geschobenen Broschüren (2).

2. Vorrichtung nach Anspruch 1, **dadurch gekennzeichnet, dass** die im Wesentlichen U-förmige Bahn (17) zumindest teilweise durch eine Führungskurve (18) gebildet ist und die Führungselemente (14, 16) als Rollen ausgebildet sind, die auf der Führungskurve (18) abrollen.

3. Vorrichtung nach einem der vorangehenden Ansprüche, **dadurch gekennzeichnet, dass** die Wendevorrichtung (8) zum Drehen des Schlittens (12) einen ersten Antrieb (22) und einen zweiten Antrieb (24) aufweist, die unabhängig voneinander ansteuerbar sind.

4. Vorrichtung nach Anspruch 3, **dadurch gekennzeichnet, dass** der erste Antrieb (22) einen ersten Pneumatikzylinder (26) und der zweite Antrieb (24) einen zweiten Pneumatikzylinder (28) umfasst, die jeweils im Wesentlichen vertikal hin- und herbewegbar sind.

5. Vorrichtung nach Anspruch 4, **dadurch gekennzeichnet, dass** der erste Pneumatikzylinder (26) in einem Bereich der Wendevorrichtung (8) angeordnet ist, der nahe der Zuführvorrichtung (6) ist, und der zweite Pneumatikzylinder (28) in einem Bereich der Wendevorrichtung (8) angeordnet ist, der der Zuführvorrichtung (6) abgewandt ist.

6. Vorrichtung nach Anspruch 5, **dadurch gekennzeichnet, dass** der Schlitten (12) eine Auflagefläche (36) und eine davon winklig abragende Seitenwand (38) aufweist, wobei im Bereich der Seitenwand (38) eine Aufnahmetasche (40) ausgebildet ist, in der der Tray (4) während des Drehens aufgenommen ist.

7. Vorrichtung nach Anspruch 6, **dadurch gekennzeichnet, dass** der erste und der zweite Pneumatikzylinder (26, 28) mit einem ersten und einem zweiten Auflageelement (47, 48) verbunden sind, wobei das erste Auflageelement (47) des ersten Pneumatikzylinders (26) an der der Zuführvorrichtung (6) zugewandten Seite der Auflagefläche (36) angreift und das zweite Auflageelement (48) des zweiten Pneumatikzylinders (28) in einem Übergangsbereich zwischen der Auflagefläche (36) und der Seitenwand (38) angreift.

8. Vorrichtung nach Anspruch 7, **dadurch gekennzeichnet, dass** das erste Auflageelement (47) einen Stift (15) aufnimmt, der mit dem ersten Führungselement (14) verbunden ist, und das zweite Auflageelement (48) eine am Schlitten (12) befestigte Stange (52) aufnimmt.

9. Vorrichtung nach einem der vorangehenden Ansprüche, **dadurch gekennzeichnet, dass** zwei Schiebeelemente (30, 58) zum Entleeren des Trays (4) vorgesehen sind, wobei das erste Schiebeelement (30) und das zweite Schiebeelement (58) an mindestens einer Führungsschiene (56, 60) hin- und herbewegbar sind, wobei das erste Schiebeelement (30) zudem um eine erste Drehachse (D1) drehbar ist, die im Wesentlichen senkrecht zur Transportrichtung (T) verläuft, und wobei das zweite Schiebeelement (58) zudem um eine zweite Drehachse (D2) drehbar ist, die im Wesentlichen parallel zur Transportrichtung (T) verläuft.

10. Vorrichtung nach einem der vorangehenden Ansprüche, **dadurch gekennzeichnet, dass** die U-förmige Bahn (17) einen geradlinigen Basisabschnitt (46) aufweist, dessen Länge im Wesentlichen einer Länge des ersten Schenkels (42) entspricht, und dass in der Aufnahmestellung die beiden Führungselemente (14, 16) jeweils in einem Übergangsbereich zwischen dem jeweiligen Schenkel (42, 44) und dem Basisabschnitt (46) positioniert sind.

11. Vorrichtung nach einem der vorangehenden Ansprüche, **dadurch gekennzeichnet, dass** ein Behälter (50) zum Aufnehmen der zu entsorgenden leeren Trays (4) unterhalb der Wendevorrichtung (8) angeordnet ist.

12. Verfahren zum Aufnehmen, Entleeren und anschließenden Entsorgen von mit Broschüren (2) befüllten Trays (4), mit folgenden Schritten:
Zuführen eines befüllten Trays (4) in einer Transportrichtung (T) in einen Schlitten (12) einer Wendevorrichtung (8), der sich in einer Aufnahmestellung befindet,
anschließendes Drehen des Schlittens (12) in einer ersten Drehrichtung (R1) um 60° bis 120° in eine Entleerstellung und Entleeren des mit Broschüren (2) gefüllten Trays (4) durch Herausschieben der Broschüren (2) aus dem Tray (4) im Wesentlichen senkrecht zur Transportrichtung (T),
anschließendes Zurückdrehen des Schlittens (12) an der Aufnahmestellung vorbei in eine der ersten Drehrichtung entgegengesetzten zweiten Drehrichtung (R2) in eine Entsorgungsstellung, in der der Schlitten (12) bezüglich der Aufnahmestellung in die zweite Drehrichtung (R2) um 45° bis 110° gedreht ist und das entleerte Tray (4) von dem Schlitten (12) fällt, und
anschließendes Zurückdrehen des Schlittens (12) in der ersten Drehrichtung (R1) in die Aufnahmestellung.

13. Verfahren nach Anspruch 12, **dadurch gekennzeichnet, dass** eine Auflagefläche (36) des Schlittens (12) zum Aufnehmen eines Trays (4) in der Aufnahmestellung in einem Winkel von zwischen -20° und +20°, vorzugsweise zwischen -5° und +5°, zur Horizontalen angeordnet ist.

14. Verfahren nach Anspruch 12 oder 13, **dadurch gekennzeichnet, dass** der Schlitten (12) in der Entleerstellung bezüglich der Aufnahmestellung um zwischen 70° und 110° in die erste Drehrichtung (R1) gedreht ist, vorzugsweise um zwischen 80° und 100°, mehr bevorzugt um zwischen 85° und 95°, besonders bevorzugt um 90°.

15. Verfahren nach einem der Ansprüche 12 bis 14, **dadurch gekennzeichnet, dass** der Schlitten (12) in der Entsorgungsstellung bezüglich der Aufnahmestellung um zwischen 45° und 105° in die zweite Drehrichtung (R2) gedreht ist, vorzugsweise um zwischen 45° und 90°, mehr bevorzugt um zwischen 60° und 90°, besonders bevorzugt um zwischen 65° und 80°.

## Claims

1. Device for emptying and subsequent disposal of trays (4) filled with brochures (2), with
a supply device (6) for transporting the filled trays (4) in a transport direction (T),
a turning device (8) for turning the trays (4) with a slide (12) which is movable to and fro and thereby rotatable between a receiving position, an emptying position and a disposal position, wherein the slide (12) has a first guide element (14) and a second guide element (16) which are guided along a substantially U-shaped path (17) which has a first arm (42) and a second arm (44), wherein the first guide element (14) is positioned in the emptying position of the slide (12) in an end area of the arm (42) of the U-shaped path (17), wherein the second guide element (16) is positioned in the disposal position of the slide (12) in an end area of the second arm (44) of the U-shaped path (17), and wherein the first guide element (14) and the second guide element (16) are positioned in the receiving position of the slide (12) between the two end areas.
at least one sliding element (30, 58) for emptying the trays (4) in the emptying position of the slide (12), and
a conveying means (32) for forwarding the brochures (2) pushed out from the tray (4).

2. Device according to claim 1 **characterised in that** the substantially U-shaped path (17) is formed at least in part by a guide curve (18) and the guide elements (14, 16) are designed as rollers which roll on the guide curve (18).

3. Device according to one of the preceding claims **characterised in that** the turning device (8) for turning the slide (12) has a first drive (22) and a second drive (24) which are controllable independently of one another.

4. Device according to claim 3 **characterised in that** the first drive (22) comprises a first pneumatic cylinder (26) and the second drive (24) comprises a second pneumatic cylinder (28) and the cylinders are each movable substantially vertically to and fro.

5. Device according to claim 4 **characterised in that** the first pneumatic cylinder (26) is arranged in an area of the turning device (8) which is close to the supply device (6), and the second pneumatic cylinder (28) is arranged in an area of the turning device (8) which is remote from the supply device (6).

6. Device according to claim 5 **characterised in that** the slide (12) has a bearing surface (36) and a side wall (38) projecting at an angle away therefrom, wherein a receiving pocket (40) is formed in the region of the side wall (38) wherein the tray (4) is received in the pocket during rotation.

7. Device according to claim 6 **characterised in that** the first and the second pneumatic cylinders (26, 28) are connected to a first and to a second bearing element (47, 48) wherein the first bearing element (47) of the first pneumatic cylinder (26) engages on the side of the bearing surface (36) facing the supply device (6), and the second bearing element (48) of the second pneumatic cylinder (28) engages in a transition region between the bearing surface (36) and the side wall (38).

8. Device according to claim 7 **characterised in that** the first bearing element (47) receives a pin (15) which is connected to the first guide element (14), and the second bearing element (48) receives a rod (52) which is attached to the slide (12).

9. Device according to one of the preceding claims **characterised in that** two sliding elements (30, 58) are provided for emptying the tray (4) wherein the first sliding element (30) and the second sliding element (58) are moveable to and fro on at least one guide rail (56, 60), wherein the first sliding element (30) is furthermore rotatable about a first axis of rotation (D1), which runs substantially perpendicular to the transport direction (T), and wherein the second sliding element (58) is rotatable about a second axis of rotation (D2) which runs substantially parallel to the transport direction (T).

10. Device according to one of the preceding claims **characterised in that** the U-shaped path (17) has a rectilinear base section (46) whose length corresponds substantially to a length of the first arm (42) and that in the receiving position the two guide elements (14, 16) are each positioned in a transition area between the respective arm (42, 44) and the base section (46).

11. Device according to one of the preceding claims **characterised in that** a container (50) is arranged underneath the turning device (8) for receiving the empty trays (4) which are to be disposed of.

12. Method for receiving, emptying and then disposing of trays (4) filled with brochures (2), having the following steps:
supplying a filled tray (4) in a transport direction (T) into a slide (12) of a turning device (8) which is located in a receiving position;
then turning the slide (12) in a first direction of rotation (R1) about 60° to 120° into an emptying position and emptying the trays (4), filled with brochures (2), by pushing out the brochures (2) from the tray (4) substantially perpendicularly relative to the transport direction (T),
then turning back the slide (12) past the receiving position into a second direction of rotation (R2) opposite the first direction of rotation, into a disposal position in which the slide (12) is turned relative to the receiving position 45° to 110° into the second direction of rotation (R2) and the emptied tray (4) falls from the slide (12), and
then turning back the slide (12) in the first direction of rotation (R1) into the receiving position.

13. Method according to claim 12 **characterised in that** a bearing surface (36) of the slide (12) for receiving a tray (4) in the receiving position is arranged at an angle of between -20° and +20°, preferably between -5° and +5°, to the horizontal.

14. Method according to claim 12 or 13 **characterised in that** the slide (12) in the emptying position is turned around relative to the receiving position between 70° and 110° into the first direction of rotation (R1), preferably between 80° and 100°, more particularly preferred between 85° and 95°, more especially 90°.

15. Method according to one of claims 12 to 14 **characterised in that** the slide (12) in the disposal position is turned around relative to the receiving position between 45° and 10° in the second direction of rotation (R2), preferably between 45° and 90°, more particularly preferred between 60° and 90°, more especially between 65° and 80°.

## Revendications

1. Dispositif pour vider puis à éliminer immédiatement après des bacs (4) remplis de brochures (2), comprenant
un dispositif d'amenée (6) pour rapprocher les bacs (4) remplis dans une direction de transport (T),
un dispositif de retournement (8) pour faire tourner les bacs (4), pourvu d'un chariot (12), qui peut effectuer des mouvements de va-et-vient entre une position de réception, une position de vidage et une position d'élimination et qui peut ainsi tourner, dans lequel le chariot (12) présente un premier élément de guidage (14) et un deuxième élément de guidage (16), qui sont guidés le long d'une voie (17) présentant une forme sensiblement de U, laquelle présente une première branche (42) et une deuxième branche (44), dans lequel le premier élément de guidage (14) est positionné dans la position de vidage du chariot (12), dans une zone d'extrémité de la première branche (42) de la voie (17) présentant une forme de U, dans lequel le deuxième élément de guidage (16) est positionné dans la position d'élimination du chariot (12) dans une zone d'extrémité de la deuxième branche (44) de la voie (17) présentant une forme de U, et dans lequel le premier élément de guidage (14) et le deuxième élément de guidage (16) sont positionnés dans la position de réception du chariot (12) entre les deux zones d'extrémité,
au moins un élément de glissement (30, 58) pour vider les bacs (4) dans la position de vidage du chariot (12), et
un moyen de convoyage (32) pour poursuivre le convoyage des brochures (2) glissées hors du bac (4).

2. Dispositif selon la revendication 1, **caractérisé en ce que** la voie (17) présentant sensiblement une forme de U est formée au moins en partie par une came de guidage (18), et **en ce que** les éléments de guidage (14, 16) sont réalisés sous la forme de rouleaux, qui roulent sur la came de guidage (18).

3. Dispositif selon l'une quelconque des revendications précédentes, **caractérisé en ce que** le dispositif de retournement (8) pour tourner le chariot (12) présente un premier entraînement (22) et un deuxième entraînement (24), qui peuvent être commandés indépendamment l'un de l'autre.

4. Dispositif selon la revendication 3, **caractérisé en ce que** le premier entraînement (22) comprend un premier cylindre pneumatique (26), et **en ce que** le deuxième entraînement (24) comprend un deuxième cylindre pneumatique (28), qui peuvent effectuer des mouvements de va-et-vient respectivement de manière sensiblement verticale.

5. Dispositif selon la revendication 4, **caractérisé en ce que** le premier cylindre pneumatique (26) est disposé dans une zone du dispositif de retournement (8), qui est proche du dispositif d'amenée (6), et **en ce que** le deuxième cylindre pneumatique (28) est disposé dans une zone du dispositif de retournement (8), qui est opposé au dispositif d'amenée (6).

6. Dispositif selon la revendication 5, **caractérisé en ce que** le chariot (12) présente une surface d'appui (36) et une paroi latérale (38) dépassant de cette dernière en formant un angle, un compartiment de réception (40) étant réalisé dans la zone de la paroi latérale (38), dans lequel le bac (4) est reçu au cours de la rotation.

7. Dispositif selon la revendication 6, **caractérisé en ce que** le premier et le deuxième cylindre pneumatique (26, 28) sont reliés à un premier et à un deuxième élément d'appui (47, 48), dans lequel le premier élément d'appui (47) du premier cylindre pneumatique (26) s'engage au niveau du côté, tourné vers le dispositif d'amenée (6), de la surface d'appui (36) et le deuxième élément d'appui (48) du deuxième cylindre pneumatique (28) s'engage dans une zone de transition entre la surface d'appui (36) et la paroi latérale (38).

8. Dispositif selon la revendication 7, **caractérisé en ce que** le premier élément d'appui (47) reçoit une tige (15), qui est reliée au premier élément de guidage (14), et **en ce que** le deuxième élément d'appui (48) reçoit une barre (52) fixée au niveau du chariot (12).

9. Dispositif selon l'une quelconque des revendications précédentes, **caractérisé en ce que** deux éléments de glissement (30, 58) sont prévus afin de vider le bac (4), dans lequel le premier élément de glissement (30) et le deuxième élément de glissement (58) peuvent effectuer des mouvements de va-et-vient au niveau au moins d'un rail de guidage (56, 60), dans lequel le premier élément de glissement (30) peut tourner en outre autour d'un premier axe de rotation (D1), qui s'étend sensiblement de manière perpendiculaire par rapport à la direction de transport (T), et dans lequel le deuxième élément de glissement (58) peut tourner en outre autour d'un deuxième axe de rotation (D2), qui s'étend sensiblement de manière parallèle par rapport à la direction de transport (T).

10. Dispositif selon l'une quelconque des revendications précédentes, **caractérisé en ce que** la voie (17) présentant une forme de U présente un segment de base (46) rectiligne, dont la longueur correspond sensiblement à une longueur de la première branche (42), et **en ce que** dans la position de réception, les deux éléments de guidage (14, 16) sont positionnés respectivement dans une zone de passage entre la branche (42, 44) respective et le segment de base (46).

11. Dispositif selon l'une quelconque des revendications précédentes, **caractérisé en ce qu'**un contenant (50) pour recevoir les bacs (4) vides à éliminer est disposé en dessous du dispositif de retournement (8).

12. Procédé pour recevoir, vider puis éliminer immédiatement après des bacs (4) remplis de brochures (2), comprenant des étapes qui suivent :
l'amenée d'un bac (4) rempli dans une direction de transport (T) dans un chariot (12) d'un dispositif de retournement (8), qui se trouve dans une position de réception,
la rotation immédiatement après du chariot (12) dans une première direction de rotation (R1) de 60° à 120° dans une position de vidage et le vidage du bac (4) rempli de brochures (2) en glissant les brochures (2) en dehors du bac (4) sensiblement de manière perpendiculaire par rapport à la direction de transport (T),
le retour par rotation immédiatement après du chariot (12), en longeant la position de réception, dans une deuxième direction de rotation (R2), opposée à la première direction de rotation, dans une position d'élimination, dans laquelle le chariot (12) est tourné dans la deuxième direction de rotation (R2) de 45° à 110° par rapport à la position de réception et le bac (4) vidé tombe du chariot (12), et
le retour par rotation immédiatement après du chariot (12) dans la première direction de rotation (R1) dans la position de réception.

13. Procédé selon la revendication 12, **caractérisé en ce qu'**une surface d'appui (36) du chariot (12) pour recevoir un bac (4) dans la position de réception est disposée selon un angle compris entre -20° et +20°, de préférence entre -5° et +5°, par rapport à l'horizontale.

14. Procédé selon la revendication 12 ou 13, **caractérisé en ce que** le chariot (12) dans la position de vidage par rapport à la position de réception est tourné dans la première direction de rotation (R1) d'un angle compris entre 70° et 110°, de préférence compris entre 80° et 100°, de manière davantage préférée compris entre 85° et 95°, de manière particulièrement préférée de 90°.

15. Procédé selon l'une quelconque des revendications 12 à 14, **caractérisé en ce que** le chariot (12) dans la position d'élimination par rapport à la position de réception est tourné dans la deuxième direction de rotation (R2) d'un angle compris entre 45° et 105°, de préférence compris entre 45° et 90°, de manière davantage préférée compris entre 60° et 90°, de manière particulièrement préférée compris entre 65° et 80°.
